## Europäisches Patentamt

## European Patent Office

## Office européen des brevets

(19)

(11) Veröffentlichungsnummer: **0 241 641**
**B1**

(12)

# EUROPÄISCHE PATENTSCHRIFT

(45) Veröffentlichungstag der Patentschrift:
22.08.90

(51) Int. Cl.⁵: **B62D 25/16, F41H 5/04**

(21) Anmeldenummer: 87100889.2

(22) Anmeldetag: 23.01.87

(54) Schutzkappe für die vordersten Räder eines gepanzerten Kettenfahrzeugs.

(30) Priorität: 07.04.86 DE 3611642

(43) Veröffentlichungstag der Anmeldung:
21.10.87 Patentblatt 87/43

(45) Bekanntmachung des Hinweises auf die Patenterteilung:
22.08.90 Patentblatt 90/34

(84) Benannte Vertragsstaaten:
BE CH DE ES FR GR IT LI NL SE

(56) Entgegenhaltungen:
DE-A- 2 103 762
FR-A- 469 915
FR-A- 638 364
FR-A- 751 148
FR-A- 969 893
FR-A- 1 114 951
GB-A- 316 165
GB-A- 347 820

(73) Patentinhaber: Clouth Gummiwerke AG, Niehler
Strasse 92 - 116, D-5000 Köln 60(DE)

(72) Erfinder: Gilles, Martin, Rambouxstrasse 76,
D-5000 Köln 60(DE)
Erfinder: Böhne, Hans, Pohler Bruch 8,
D-5067 Kürten(DE)

(74) Vertreter: Happe, Otto, Dipl.-Ing., Isselburger
Strasse 12, D-5000 Köln 60(DE)

## Beschreibung

Die Erfindung betrifft ein gepanzertes Kettenfahrzeug mit einer Schutzkappe für die vordersten Räder – Leit- bzw. Triebräder – bzw. die um diese herumgeführte Kette, insbesondere aus gewebearmiertem elastischem Werkstoff.

Bei dem vorgenannten Kettenfahrzeug verhindert die Schutzkappe Staub- und Schneeaufwirbelungen. Die Schutzkappe verhindert ferner, daß infolge der hohen Relativgeschwindigkeit des oberen Kettenteiles Gegenstände, beispielsweise Steine oder Teile der Kette selbst, weggeschleudert und an entgegenkommenden, vorausfahrenden oder überholenden Fahrzeugen Beschädigungen hervorrufen.

Die Schutzkappen der bekannten gepanzerten Kettenfahrzeuge der vorgenannten Art (vgl. z.B. DE-C 2 103 762) weisen den Nachteil auf, daß sie sich im Fahrbetrieb infolge ihres Eigengewichts verformen bzw. durchbiegen; sie können dadurch in die Kette geraten und zerstört werden. Ferner können die Schutzkappen der bekannten gepanzerten Kettenfahrzeuge von weggeschleuderten Steinen, Kettenteilen u. dgl. durchschlagen werden.

Der Erfindung liegt die Aufgabe zugrunde, die gepanzerten Kettenfahrzeuge mit einer Schutzkappe der genannten Art so zu gestalten, daß der vorgenannte Nachteil nicht auftreten kann. Diese Aufgabe wird durch die im Anspruch 1 angegebene Erfindung gelöst.

Vorteilhafte Ausgestaltungen der Erfindung sind in den Unteransprüchen beschrieben.

In der Zeichnung ist ein Ausführungsbeispiel der Erfindung dargestellt.

Es zeigen:

Fig. 1 Das Vorderteil eines gepanzerten Kettenfahrzeugs in Seitenansicht,
Fig. 2 einen Schnitt nach der Linie II–II in Fig. 1.

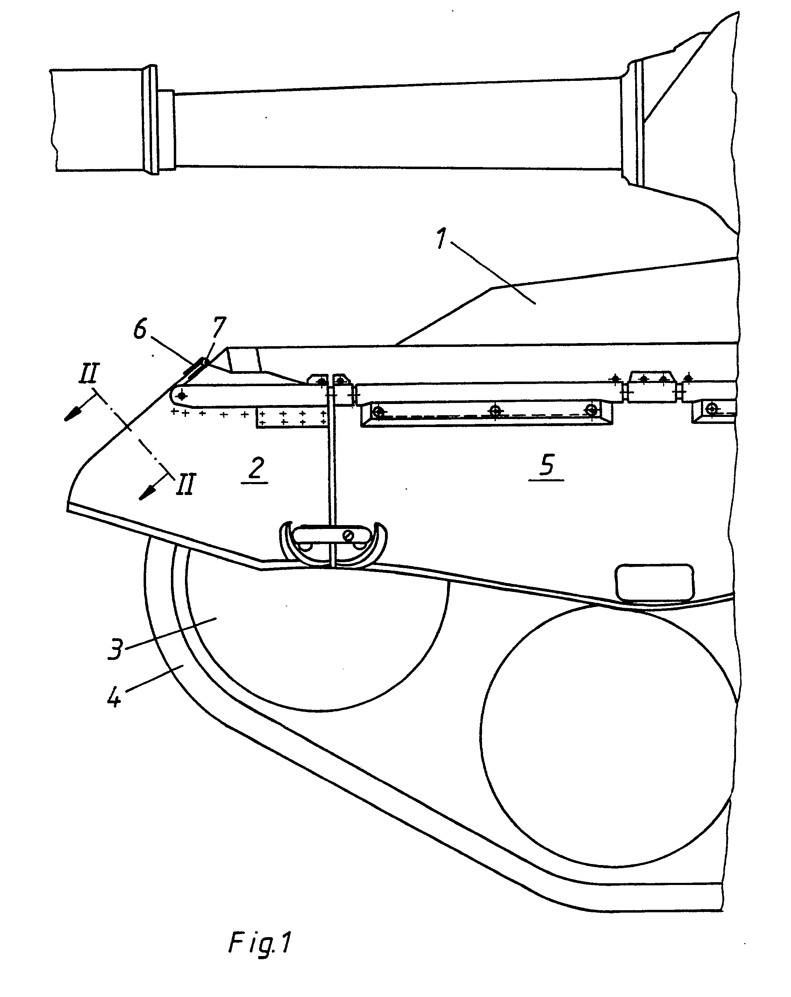

Das in Fig. 1 dargestellte Kettenfahrzeug 1 weist eine Verkleidung auf, die aus einer gewebearmierten elastischen Schutzkappe 2 für die vordersten Räder 3 bzw. die um diese herumgeführte Kette 4 und einer metallarmierten Seitenverkleidung 5 besteht. Die Schutzkappe 2 ist mittels eines Scharniers 6, das einen Schmierstoff enthaltenden Bolzen 7 aufweist, an dem Kettenfahrzeug 1 angelenkt.

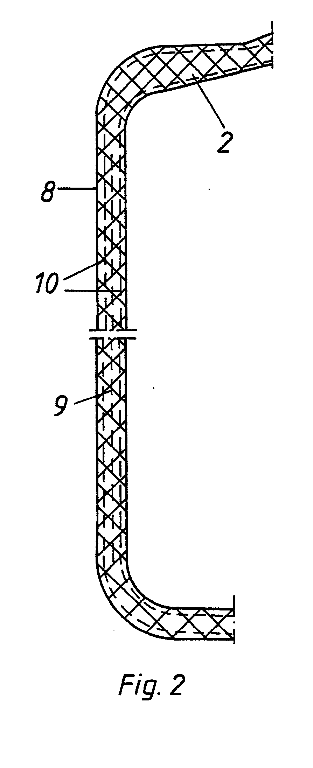

Wie aus Fig. 2 zu ersehen ist, weist die Stirnplatte 8 der Schutzkappe 2 eine Verstärkungseinlage 9 auf, die durch eine dicke gestrichelte Linie angedeutet ist. Die Verstärkungseinlage 9, die aus Federstahldraht besteht, ist zwischen zwei durch dünne gestrichelte Linien angedeutete Gewebeeinlagen 10, die beispielsweise aus Nylon bestehen können, angeordnet. Die Verstärkungseinlage 9 ist von dem die Schutzkappe 2 bildenden elastischen Werkstoff durchdrungen und fest damit verbunden, beispielsweise durch Gummi-Metall-Bindung, so daß der elastische Charakter der Gesamtkonstruktion bei einem erhöhten E-Modul erhalten bleibt. Hierdurch werden auch Knicke und Beulen weitestgehend vermieden.

## Patentansprüche

1. Gepanzertes Kettenfahrzeug (1) mit einer Schutzkappe (2) für die vordersten Räder (3) – Leit- bzw. Triebräder – bzw. die um diese herumgeführte Kette (4), insbesondere aus gewebearmiertem elastischem Werkstoff, dadurch gekennzeichnet, daß nur in der Stirnplatte (8) der Schutzkappe (2) zusätzlich eine Verstärkungseinlage (9) aus Federstahldraht vorgesehen ist.

2. Gepanzertes Kettenfahrzeug nach Anspruch 1, dadurch gekennzeichnet, daß die Verstärkungseinlage (9) zwischen zwei Gewebeeinlagen (10) angeordnet ist.

3. Gepanzertes Kettenfahrzeug nach Anspruch 1 und 2, dadurch gekennzeichnet, daß die Verstärkungseinlage (9) aus sich kreuzenden Federstahldrähten gebildet ist.

4. Gepanzertes Kettenfahrzeug nach Anspruch 1 oder 2, dadurch gekennzeichnet, daß die Verstärkungseinlage (9) aus gewebeartig angeordneten Federstahldrähten gebildet ist.

## Claims

1. Tracked armoured vehicle (1) provided with a hoddlike shield (2) for the front wheels (3) – i.e. the leading or drive wheels – resp. for the chain (4) placed around these wheels, the chain being made of fabric reinforced elastic material characterized in that an additional reinforcing intermediate layer (9) made of spring steel wire is only provided inside the frontal plate of the hoddlike shield (2).

2. Tracked armoured vehicle according to claim 1 characterized in that the reinforcing intermediate layer (9) is provided between the two fabric layers (10).

3. Tracked armoured vehicle according to claims 1 and 2 characterized in that the reinforcing intermediate layer (9) is formed of crossing spring steel wires.

4. Tracked armoured vehicle according to claim 1 or 2 characterized in that the reinforcing intermediate layer (9) is made of tissue-like disposed spring steel wires.

## Revendications

1. Véhicule blindé à chenilles (1) avec un tablier de protection (2) pour les roues avant (3) – roues de guidage ou motrices – ou les chenilles (4) guidées autour de celles-ci, en particulier en matière élastique tissée armée, caractérisé en ce qu'une couche de renforcement (9) en acier à ressort est de plus prévue uniquement dans la plaque frontale (8) du tablier (2).

2. Véhicule blindé selon la revendication 1, caractérisé en ce que la couche de renforcement (9) est disposée entre deux couches tissée (10).

3. Véhicule blindé selon la revendication 1 ou 2, caractérisé en ce que la couche de renforcement (9) est réalisée en fils d'acier à ressort croisés.

4. Véhicule blindé selon la revendication 1 ou 2, caractérisé en ce que la couche de renforcement (9) est réalisée en fils d'acier à ressort disposés de manière entrecroisée.

Fig.1

Fig. 2